# EUROPÄISCHE PATENTSCHRIFT

(11) **EP 0 665 199 B1**
(45) Veröffentlichungstag und Bekanntmachung des Hinweises auf die Patenterteilung: **04.10.2000**
(21) Anmeldenummer: 95101314.3
(22) Anmeldetag: 31.01.1995
(51) Int. Cl.: C05F 17/00, C05F 7/00, C05F 3/00, C05F 17/02

(54) **Verfahren zur Behandlung und Entsorgung von Fest- und/oder Dickstoffe enthaltendem Abwasser**
Process for the treatment and disposal of waste waters containing solid or thick matters
Procédé de traitement et élimination des eaux usées contenant des matières solides ou épaisses

(30) Priorität: 01.02.1994 DE 4402976
(43) Veröffentlichungstag der Anmeldung: 02.08.1995
(73) Patentinhaber: Hartke, Gottfried, Dr., 49393 Lohne (DE); EnviTec-Mall - Umweltsysteme GmbH & Co. KG, 48268 Greven (DE)
(72) Erfinder: Hartke, Gottfried, Dr., 49393 Lohne (DE); Ruhe, Kunibert, 49456 Lüsche/Bakum (DE)
(74) Vertreter: Patentanwälte Lippert, Stachow, Schmidt & Partner

(56) Entgegenhaltungen:
- WO-A-92/10444
- WO-A-94/20436
- DE-A- 4 220 947
- GB-A- 543 865

## Beschreibung

Die Erfindung betrifft ein Verfahren zur Behandlung und Entsorgung von Fest- und/oder Dickstoffe enthaltendem Abwasser, insbesondere Gülle, gemäß dem Oberbegriff des Anspruches 1.

Ein Verfahren der oben genannten Art ist aus DE 42 20 947 A1 bekannt. Bei diesem Verfahren wird das Abwasser in einen Fermentier- und Trocknungsturm gepumpt und mittig oberhalb eines Rohkompostbehälters ausgebracht. Die unter Zurücklassung von Feststoffen abtropfende flüssige Phase wird über eine am Boden eingesenkte Drainage in einen Filtratbehälter abgezogen. Von dort wird sie über eine Saug- und Druckpumpe auf eine Sprühdüse im oberen Turmteil gedrückt. Die von der Sprühdüse herabfallenden Sprühtropfen geben Wasser an einen im Gegenstrom durch den Turm gepumpten Luftstrom ab und durchfeuchten mit ihrem Restwassergehalt den Rohkompost und gelangen als Überschuß erneut in den Filtratbehälter. Nach oben ist der Turm durch ein Dach abgedeckt, in das eine Abluftvorrichtung eingebaut ist, die nur feuchte Luft austreten läßt und mitgerissene Sprühtropfen zuvor nach innen abscheidet.

Als nachteilig wird bei diesem Verfahren angesehen, daß es zu seiner Ausführung eines hohen apperativen und baulichen Aufwandes bedarf, wobei insbesondere der Fermentier- und Trocknungsturm zu nennen ist. Dabei wird das Innenvolumen des Turmes nur zu einem sehr geringen Teil, in der Praxis etwa 15 bis 20%, von dem Rohkompostbehälter eingenommen, während der weitaus größte Teil des Turmvolumens für die Verdampfung von Wasser aus der flüssigen Phase benötigt wird. Außerdem ist für die Förderung und das Versprühen der flüssigen Phase eine leistungsstarke Pumpe erforderlich, da die Sprühdüse mehrere Meter, bei dem im obigen Dokument beschriebenen Ausführungsbeispiel z.B. 6 m, über dem Niveau des Filtratbehälters liegt. Weiterhin besteht bei diesem Verfahren die Gefahr, daß der Rohkompost infolge zu starker Zuführung von Flüssigkeit versumpft, wodurch die in diesem gewünschte aerobe Umsetzung beeinträchtigt wird. Diese Beeinträchtigung kann noch dadurch verstärkt werden, daß derselbe Rohkompost auch als mechanischer Filter zur Abtrennung der festen Phase von der flüssigen Phase des zu behandelnden Abwassers eingesetzt wird. Außerdem wird als nachteilig angesehen, daß der dem Turm an seinem unteren Ende zugeführte Luftstrom nur zu einem sehr geringen Teil durch den Rohkompost strömt, da allseitig um den Kompostbehälter herum Freiräume vorgesehen sind, die infolge ihres wesentlich geringeren Strömungswiderstandes dazu führen, daß der Luftstrom den Weg außen um den Kompostbehälter herum nimmt. Demzufolgen trägt auch der Rohkompost selbst praktisch nicht zur Verdunstung von Wasser aus der flüssigen Phase bei. Weiter weist das bekannte Verfahren den Nachteil auf, daß es Geruchsbelästigungen in der Umgebung durch das abgeführte Luft-Wasserdampf-Gemisch nicht vollständig verhindert. Schließlich ist festzustellen, daß bei diesem bekannten Verfahren ca. alle 8 bis 10 Tage neues Filter- und Fermentiermaterial, d.h. neuer Rohkompost eingesetzt werden muß, was eine ständige Vorhaltung entsprechender Materialien erfordert.

Es stellt sich daher die Aufgabe, ein Verfahren der eingangs genannten Art zu schaffen, das die vorangehend aufgeführten Nachteile vermeidet und das mit einem verminderten apparativen und baulichen Aufwand bei geringem Materialeinsatz und ohne Geruchsbelästigungen eine wirkungsvolle und betriebssichere Behandlung und Entsorgung von Fest- und/oder Dickstoffe enthaltendem Abwasser gewährleistet.

Die Lösung dieser Aufgabe gelingt erfindungsgemäß durch ein Verfahren der oben genannten Art, welches dadurch gekennzeichnet ist, daß der Luftstrom unter Luftklärung zwangsgeführt durch einen Biomassefilter hindurchgeleitet wird und daß die Verdunstung von Wasser aus der flüssigen Phase des Abwassers innerhalb des Biomassefilters vorgenommen wird.

Mit dem erfindungsgemäßen Verfahren wird in einem einfachen Verfahrensablauf in Kombination miteinander gleichzeitig eine wirkungsvolle Luftklärung und eine intensive Verdunstung von Wasser aus der flüssigen Phase innerhalb des Biomassefilters erreicht, wobei nur ein geringer Bauaufwand für eine Anlage zur Durchführung dieses Verfahrens nötig ist. Insbesondere kann eine entsprechende Anlage sehr flach bauen, so daß keine kostspieligen und auch optisch häufig störenden Türme errichtet werden müssen. Durch die Zwangsführung des Luftstromes werden Bypaßströmungen vermieden, so daß sichergestellt ist, daß der gesamte Luftstrom auch den Biomassefilter durchströmt. So wird trotz des relativ kleinen Volumens eines Biomassefilters aufgrund der in diesem durch die Biomasse gebildeten sehr großen Oberfläche eine wirksame Verdunstung des Wasseranteils der flüssigen Phase und gleichzeitig eine intensive aerobe mikrobielle Umsetzung der in der flüssigen Phase zugeführten sonstigen Stoffe und damit die wirksame Luftklärung sichergestellt. Die abgetrennte feste Phase kann in an sich bekannter Weise behandelt und/oder verwendet werden.

Gemäß einer ersten Weiterbildung des erfindungsgemäßen Verfahrens wird die flüssige Phase vor dem Eintritt des Luftstromes in den Biomassefilter in den Luftstrom eingebracht, z.B. eingesprüht oder eingeschleudert oder per Ultraschall vernebelt. Auf diese Weise gelangt die flüssige Phase in Form eines Flüssigkeitsnebels zusammen mit dem Luftstrom und von diesem transportiert in den Biomassefilter. Dadurch ist diese Verfahrensausführung besonders einfach ausführbar und gewährleistet zugleich eine gute und gleichmäßige Verteilung der flüssigen Phase im Biomassefilter.

Eine alternative Verfahrensausgestaltung schlägt vor, daß der Luftstrom und die flüssige Phase dem Biomassefilter getrennt zugeführt werden. Diese Verfahrensausführung erlaub insbesondere eine stärkere gezielte Einwirkung auf die Mengenverhältnisse und die Verteilung von Luftstrom und flüssiger Phase.

Bei der zuvor genannten getrennten Zuführung von Luftstrom und flüssiger Phase zum Biomassefilter wird bevorzugt die flüssige Phase innerhalb der Filtermasse des Biomassefilters verrieselt, um eine Ausgasung von schädlichen oder belästigenden Stoffen zu verhindern oder zu vermindern.

Bei vielen Anwendungen des erfindungsgemäßen Verfahrens kann davon ausgegangen werden, daß verunreinigte und/ oder erwärmte Abluft zur Verfügung steht und es ist deshalb zweckmäßig, daß diese Abluft für den Luftstrom verwendet wird. Auf diese Weise wird gleichzeitig die Abluft gereinigt und die gegebenenfalls in dieser enthaltene Wärmeenergie zur Unterstützung der mikrobiellen Umsetzung genutzt.

Da das erfindungsgemäße Verfahren unter anderem für die Behandlung und Entsorgung von Gülle geeignet ist, ist bei derartiger Anwendung zweckmäßig die für den Luftstrom verwendete Abluft Stallabluft.

Um eine Kompaktierung der den Biomassefilter bildenden Filtermasse zu vermeiden und um das Verfahren mit möglichst einfachen apparativen Mitteln ausführen zu können, ist bevorzugt vorgesehen, daß der Luftstrom dem Biomassefilter von unten her durch einen mit Luftführungskanälen und Luftdurchtrittsöffnungen versehenen Filterboden zugeführt wird und daß man den Luftstrom an der Oberseite des Biomassefilters austreten läßt oder abzieht. Zweckmäßig wird dabei dafür gesorgt, daß zu den Seiten hin ein Ein- oder Austritt des Luftstromes nicht möglich ist, so daß die gewünschte Zwangsführung des Luftstromes durch den gesamten Biomassefilter gewährleistet ist.

Falls eine einstufige Behandlung im Ergebnis nicht ausreichend oder zufriedenstellend ist, kann der Luftstrom auch nacheinander durch mehrere Biomassefilter geleitet werden.

In diesem Zusammenhang ist dann bevorzugt vorgesehen, daß nur dem ersten bis maximal vorletzten der von dem Luftstrom nacheinander durchströmten Biomassefilter die flüssige Phase des Abwassers zugeführt wird. Dadurch wird erreicht, daß der letzte der von dem Luftstrom nacheinander durchströmten Biomassefilter allein zur Reinigung und Desodorierung des Luftstromes eingesetzt wird, nicht aber mehr für eine Umsetzung der flüssigen Phase des Abwassers. Die von den Mikroorganismen benötigte Feuchtigkeit wird dabei dem zuletzt durchströmten Biomassefilter als Wasserdampf mit dem Luftstrom oder als separat eingegebenes Reinwasser zugeführt.

Als Behandlung für die von der flüssigen Phase abgetrennte und abgeführte feste Phase ist bevorzugt vorgesehen, daß diese kompostiert wird und daß die bei deren Kompostierung frei werdende Wärmeenergie für eine Erwärmung des Luftstromes vor dessen Eintritt in den/die Biomassefilter eingesetzt wird. Auf diese Weise kann die auf einem niedrigen Temperaturniveau anfallende Kompostierungswärme zur Unterstützung der aeroben Umsetzung innerhalb des Biomassefilters genutzt werden.

Die Zuführung der bei der Kompostierung der festen Phase frei werdenden Wärmeenergie in den Luftstrom erfolgt bevorzugt dadurch, daß der Luftstrom ganz oder zum Teil von oben nach unten durch die kompostierende feste Phase geführt wird. Hierdurch wird zum einen eine gute Durchlüftung der festen Phase während ihrer Kompostierung und zum anderen eine Absaugung von eventuell frei werdenden störenden Geruchsstoffen aus der kompostierenden festen Phase erreicht. Somit läuft auch die Kompostierung ohne Geruchsbelästigungen für die Umgebung ab.

Außer der von der flüssigen Phase abgetrennten festen Phase des Abwassers kann der Kompostierung auch weiteres Material zugeführt werden, z.B. die Filtermasse eines erschöpften Biomassefilters. Um dessen kontinuierlichen Betrieb sicherzustellen, ist der Biomassefilter vorzugsweise in mehrere Bereiche unterteilt, die gesteuert nach Wahl mit dem Luftstrom beschickbar sind und bei denen die Filtermasse einzeln austauschbar ist.

Da bei der zuvor erwähnten Kompostierung infolge der Volumenverminderung des kompostierenden Materials Flüssigkeiten frei werden, wird vorgeschlagen, daß anfallendes und/oder frei werdendes Sickerwasser dem Abwasser oder dessen flüssiger Phase zugeführt wird. Somit gelangt auch das aus der Kompostierung stammende Sickerwasser in den Verfahrensablauf und wird bei dessen Durchlaufen geklärt.

Um weiter zu einer möglichst günstigen Wärmebilanz des Verfahrens beizutragen, kann der aus dem Biomassefilter austretende Wasserdampf gesammelt und kondensiert werden und die dabei freigesetzte Kondensationswärme für eine Erwärmung des Luftstromes vor dem Eintritt in den/die Biomassefilter eingesetzt werden. Außer durch die im Verfahren selbst anfallende Kondensationswärme des abgeführten Wasserdampfes kann auch andere gegebenenfalls vorhandene Abwärme oder gezielt zugeführte Wärme, insbesondere Solarwärme, benutzt werden.

Die zur Durchführung des Verfahrens erforderlichen Pumpen und Ventilatoren werden zweckmäßig mittels an sich bekannter Steuer- und Regeleinheiten überwacht und betätigt, so daß eine weitestgehende Automatisation des Verfahrens erreicht wird. Zu beachten ist bei der Durchführung des Verfahrens, daß dem Biomassefilter bzw. den Biomassefiltern jeweils nur soviel von der flüssigen Phase zugeführt wird, wie durch den Luftstrom verdunstbar und innerhalb des Biomassefilters aerob mikrobiell umsetzbar ist. Hierdurch werden eine Versumpfung und ein vorzeitiger mikrobieller Abbau des Biomassefilters ausgeschlossen und dessen gute Wirksamkeit über lange Zeit wird sichergestellt. Zwar wird auch die Filtermasse des Biomassefilters selbst während des Verfahrensablaufes umgesetzt und dadurch kompostiert, jedoch läuft dieser Vorgang bei entsprechend großer Nährstoffzufuhr für die Mikroorganismen über den Luftstrom sehr langsam ab und die Filtermenge bildet so im wesentlichen nur das Gerüst für die Ansiedlung der Mikroorganismen. In der Praxis können Einsatzzeiten von 5 bis 7 Jahren erreicht werden und es ist auch nur in entsprechenden Zeitabständen eine Erneuerung der Biofiltermasse erforderlich, was zudem nur einen relativ geringen Aufwand erfordert, da dieser Austausch mittels üblicher Ladegeräte, z.B. ein Schlepper mit Frontlader oder dergleichen, erfolgen kann. Die Höhe der den Biomassefilter bildenden Filtermasse sollte für die Durchführung des Verfahrens in der Größenordnung von etwa 1 bis 2,5 m liegen, um eine Kompaktierung zu vermeiden und eine gute Luftdurchlässigkeit zu gewährleisten. Eine Kapazitätsanpassung des Biomassefilters an die zu behandelnden Abwassermengen kann dann einfach durch Vergrößerung der von dem Biomassefilter eingenommenen Fläche erfolgen.

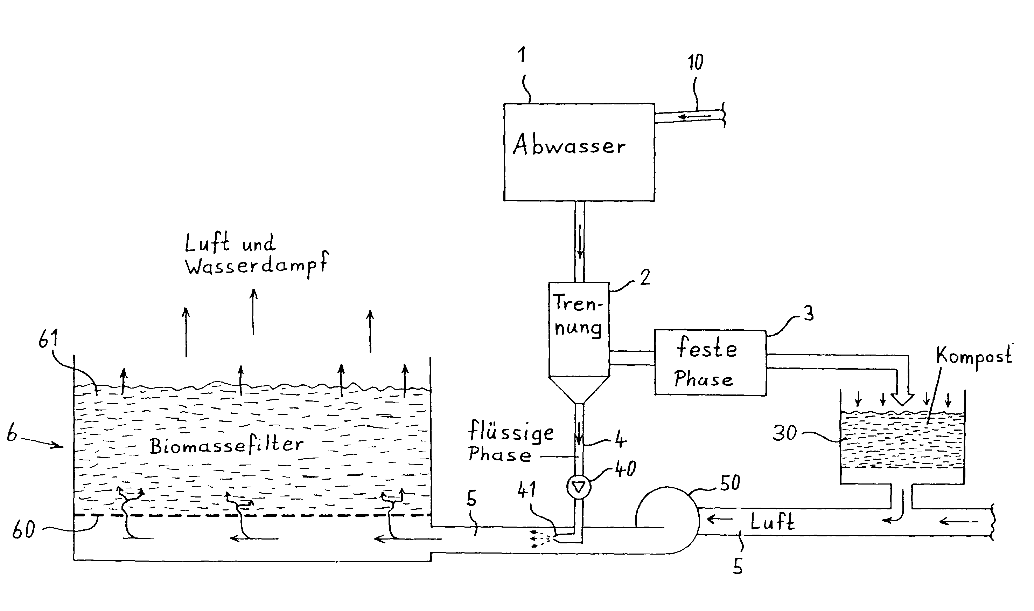

Ein Ausführungsbeispiel des erfindungsgemäßen Verfahrens wird im folgenden anhand einer Zeichnung erläutert. Die einzige Figur der Zeichnung zeigt in einer schematischen Darstellung eine zur Durchführung des Verfahrens geeignete Anlage.

Das in der Zeichnung dargestellt Ausführungsbeispiel einer Anlage zur Durchführung des oben beschriebenen Verfahrens umfaßt zunächst einen Abwassersammelbehälter 1, in welchen über mindestens einen Abwasserzulauf 10 Fest- und/oder Dickstoffe enthaltendes Abwasser gelangt. Aus dem Abwassersammelbehälter 1 gelangt das Abwasser zu einer Einrichtung 2, z.B. eine Zentrifuge, zur Trennung in eine flüssige Phase und eine feste Phase. Die feste Phase wird in einen Sammelbehälter 3 abgeführt, von wo aus sie in an sich bekannter Weise einer weiteren Behandlung durch Kompostierung zugeführt wird.

Die flüssige Phase gelangt durch eine Leitung 4 über eine Pumpe 40 zu einer Düse 41 und wird durch diese versprüht. Die Düse 41 ist in einer Luftzuleitung 5 angeordnet, durch welche mittels eines Gebläses 50 Luft gefördert wird. Die Luft kann dabei Umgebungsluft oder auch verunreinigte und/oder erwärmte Abluft sein. Im gezeigten Ausführungsbeispiel wird ein Teilstrom des Luftstromes von oben nach unten durch einen Kompostierungsbehälter 30 gesaugt, in welchem die feste Phase kompostiert wird. Hierdurch wird die bei der Kompostierung frei werdende Wärmeenergie zusammen mit eventuell austretenden belästigenden Geruchsstoffen abgezogen und dem von dem Gebläse 50 geförderten Luftstrom zugeführt.

Die Luftzuleitung 5 mündet in ein Biomassefilter 6, das unterseitig einen Filterboden 60 zur Führung und Verteilung des Luft-Flüssigkeits-Gemisches besitzt. Wie durch Strömungspfeile angedeutet ist, strömt das Luft-Flüssigkeits-Gemisch durch den Filterboden 60 hindurch in die Filtermasse 61 des Biomassefilters und durchströmt diesen über den gesamten Querschnitt von unten nach oben. Im Biomassefilter 6 spielen sich zwei wesentliche Vorgänge ab, nämlich zum einen eine aerobe mikrobielle Umsetzung der in der flüssigen Phase enthaltenen verwertbaren Bestandteile und zum anderen eine Verdunstung des Wasseranteils der flüssigen Phase. An der Oberfläche der Filtermasse 61 tritt lediglich noch ein Gemisch aus Luft und Wasserdampf aus, das problemlos in die freie Atmosphäre entlassen werden kann, da keine schädlichen oder belästigenden Bestandteile mehr darin enthalten sind.

Da die Filtermasse 61 des Biomassefilters 6 während des Betriebes des Verfahrens selbst ebenfalls, wenn auch sehr langsam, aerob mikrobiell umgesetzt, d.h. kompostiert wird, ist von Zeit zu Zeit ein Austausch der Filtermasse 61 erforderlich. Zur Sicherstellung eines kontinuierlichen Betriebes kann die Filtermasse in unterschiedliche Bereiche aufgeteilt sein, die einzeln austauschbar sind. Erschöpfte Filtermasse 61 kann dann dem zuvor erwähnten Kompostierungsbehälter 30 zur Kompostierung zusammen mit der festen Phase zugeführt werden. Dieser Austausch kann beispielsweise mittels üblicher Ladevorrichtungen oder -fahrzeuge erfolgen. Die Filtermasse 61 besteht beispielsweise aus feingeschnittenen oder gehäckselten Pflanzenteilen, die als landwirtschaftliches Neben- oder Abfallprodukt in großer Menge und kostengünstig zur Verfügung stehen.

## Patentansprüche

1. Verfahren zur Behandlung und Entsorgung von Fest- und/oder Dickstoffe enthaltendem Abwasser, insbesondere Gülle, mit folgenden Verfahrensschritten:
- das Abwasser wird in seine feste Phase und seine flüssige Phase getrennt,
- die feste Phase wird zur weiteren Behandlung und/ oder Nutzung abgeführt,
- aus der flüssigen Phase wird mittels eines Luftstromes Wasser verdunstet, das als Wasserdampf in die Atmosphäre abgeführt wird und
- die verbleibenden Bestandteile der flüssigen Phase werden aerob mikrobiell umgesetzt,
**dadurch gekennzeichnet,**
daß der Luftstrom unter Luftklärung zwangsgeführt durch einen Biomassefilter (6) hindurchgeleitet wird und daß die Verdunstung von Wasser aus der flüssigen Phase des Abwassers innerhalb des Biomassefilters (6) vorgenommen wird.

2. Verfahren nach Anspruch 1, dadurch gekennzeichnet, daß die flüssige Phase vor dem Eintritt des Luftstromes in den Biomassefilter (6) in den Luftstrom eingebracht wird, vorzugsweise durch Einsprühen oder Einschleudern oder Vernebeln per Ultraschall.

3. Verfahren nach Anspruch 1, dadurch gekennzeichnet, daß der Luftstrom und die flüssige Phase dem Biomassefilter (6) getrennt zugeführt werden.

4. Verfahren nach Anspruch 3, dadurch gekennzeichnet, daß die flüssige Phase innerhalb der Filtermasse (61) des Biomassefilters (6) verrieselt wird.

5. Verfahren nach einem der vorangehenden Ansprüche, dadurch gekennzeichnet, daß für den Luftstrom verunreinigte und/oder erwärmte Abluft verwendet wird.

6. Verfahren nach Anspruch 5, dadurch gekennzeichnet, daß die Abluft Stallabluft ist.

7. Verfahren nach einem der vorangehenden Ansprüche, dadurch gekennzeichnet, daß der Luftstrom dem Biomassefilter (6) von unten her durch einen mit Luftführungskanälen und Luftdurchtrittsöffnungen versehenen Filterboden (60) zugeführt wird und daß man den Luftstrom an der Oberseite des Biomassefilters (6) austreten läßt oder abzieht.

8. Verfahren nach einem der vorangehenden Ansprüche, dadurch gekennzeichnet, daß der Luftstrom nacheinander durch mehrere Biomassefilter (6) geleitet wird.

9. Verfahren nach Anspruch 8, dadurch gekennzeichnet, daß nur dem ersten bis maximal vorletzten der von dem Luftstrom nacheinander durchströmten Biomassefilter (6) die flüssige Phase des Abwassers zugeführt wird.

10. Verfahren nach einem der vorangehenden Ansprüche, dadurch gekennzeichnet, daß die abgeführte feste Phase kompostiert wird und daß die bei deren Kompostierung freiwerdende Wärmeenergie für eine Erwärmung des Luftstromes vor dessen Eintritt in den/die Biomassefilter (6) eingesetzt wird.

11. Verfahren nach Anspruch 10, dadurch gekennzeichnet, daß die Zuführung der Wärmeenergie in den Luftstrom dadurch erfolgt, daß der Luftstrom ganz oder zum Teil von oben nach unten durch die kompostierende feste Phase geführt wird.

12. Verfahren nach Anspruch 10 oder 11, dadurch gekennzeichnet, daß bei der Kompostierung der festen Phase anfallendes und/oder freiwerdendes Sickerwasser dem Abwasser oder dessen flüssiger Phase zugeführt wird.

13. Verfahren nach einem der vorangehenden Ansprüche, dadurch gekennzeichnet, daß der aus dem Biomassefilter (6) austretende Wasserdampf kondensiert wird und daß die dabei freigesetzte Kondensationswärme für eine Erwärmung des Luftstromes vor dessen Eintritt in den/die Biomassefilter (6) eingesetzt wird.

## Claims

1. Process for the treatment and disposal of waste water containing solid substances and/or slurry, in particular liquid manure, having the following process steps:
- the waste water is separated into its solid phase and its liquid phase,
- the solid phase is led off for further treatment and/or use,
- water is evaporated from the liquid phase by means of an air stream and is led off as water vapour into the atmosphere and
- the remaining constituents of the liquid phase are converted in an aerobic microbial manner,
characterised in that the air stream is forced through a biomass filter (6), and thereby purified, and in that the evaporation of water from the liquid phase of the waste water is effected within the biomass filter (6).

2. Process according to claim 1, characterised in that the liquid phase is introduced into the air stream before the entry of the air stream into the biomass filter (6), preferably by spraying or centrifuging or atomisation by ultrasound.

3. Process according to claim 1, characterised in that the air stream and the liquid phase are supplied separately to the biomass filter (6).

4. Process according to claim 3, characterised in that the liquid phase within the filter mass (61) of the biomass filter (6) is irrigated.

5. Process according to any one of the preceding claims, characterised in that non-purified and/or heated drawn-off air is used for the air stream.

6. Process according to claim 5, characterised in that the drawn-off air is farmyard air.

7. Process according to any one of the preceding claims, characterised in that the air stream is supplied upwards to the biomass filter (6) through a filter base (60) which is provided with air ducts and air passage openings, and in that the air stream is drawn off or allowed to escape at the upper side of the biomass filter (6).

8. Process according to any one of the preceding claims, characterised in that the air stream is directed through several biomass filters (6) in succession.

9. Process according to claim 8, characterised in that the liquid phase of the waste water is supplied only to the first up to a maximum of the penultimate of the biomass filters (6) which are passed through successively by the air stream.

10. Process according to any one of the preceding claims, characterised in that the drawn-off solid phase is composted and in that the heat energy, released during composting thereof, is used for heating of the air stream before the entry thereof into the biomass filter(s) (6).

11. Process according to claim 10, characterised in that the supply of the heat energy into the air stream is effected in that the air stream is, completely or partially, guided downwards through the decomposing solid phase.

12. Process according to claim 10 or 11, characterised in that percolation water, occurring and/or released when the solid phase is composted, is supplied to the waste water or to the liquid phase thereof.

13. Process according to any one of the preceding claims, characterised in that the water vapour escaping from the biomass filter (6) is condensed and in that the condensation heat released is used for heating of the air stream before the entry thereof into the biomass filter(s) (6).

## Revendications

1. Procédé de traitement et d'élimination d'une eau usée contenant des matières solides et/ou épaisses, en particulier du lisier, comportant les opérations de base suivantes :
- l'eau usée est séparée en sa phase solide et sa phase liquide,
- la phase solide est évacuée pour le traitement subséquent et/ou l'utilisation subséquente,
- au moyen d'un courant d'air l'eau est évaporée à partir de la phase liquide et est évacuée dans l'atmosphère sous forme de vapeur d'eau, et
- les constituants restants de la phase liquide sont convertis par voie microbienne aérobie,
caractérisé en ce que le courant d'air est conduit de manière forcée dans un filtre à biomasse (6) avec épuration de l'air et en ce que l'évaporation de l'eau à partir de la phase liquide de l'eau usée est réalisée à l'intérieur du filtre à biomasse (6).

2. Procédé selon la revendication 1, caractérisé en ce que, avant l'entrée du courant d'air dans le filtre à biomasse (6), la phase liquide est introduite dans le courant d'air, de préférence par pulvérisation ou projection ou atomisation par ultrasons.

3. Procédé selon la revendication 1, caractérisé en ce que le courant d'air et la phase liquide sont envoyés séparément au filtre à biomasse (6).

4. Procédé selon la revendication 3, caractérisé en ce que la phase liquide est épandue à l'intérieur de la masse filtrante (61) du filtre à biomasse (6).

5. Procédé selon l'une des revendications précédentes, caractérisé en ce que de l'air usé souillé et/ou chauffé est utilisé pour le courant d'air.

6. Procédé selon la revendication 5, caractérisé en ce que l'air usé est de l'air usé d'étable.

7. Procédé selon l'une des revendications précédentes, caractérisé en ce que le courant d'air est envoyé au filtre à biomasse (6) depuis le bas au travers d'un fond de filtre (60) muni de canaux de guidage d'air et d'ouverture de passage d'air et en ce qu'on fait sortir ou évacue le courant d'air au niveau du côté supérieur du filtre à biomasse (6).

8. Procédé selon l'une des revendications précédentes, caractérisé en ce que le courant d'air est conduit successivement à travers plusieurs filtres à biomasse (6).

9. Procédé selon la revendication 8, caractérisé en ce que la phase liquide de l'eau usée n'est envoyée qu'au premier jusqu'à l'avant dernier, au maximum, des filtres à biomasse (6) traversés successivement par le courant d'air.

10. Procédé selon l'une des revendications précédentes, caractérisé en ce que la phase solide évacuée est compostée et en ce que l'énergie thermique dégagée au cours de son compostage est utilisée pour un chauffage du courant d'air avant son entrée dans le ou les filtres à biomasse (6).

11. Procédé selon la revendication 10, caractérisé en ce que l'apport de l'énergie thermique au courant d'air est réalisé par le fait que le courant d'air est envoyé en totalité ou en partie de haut en bas au travers de la phase solide en cours de compostage.

12. Procédé selon la revendication 10 ou 11, caractérisé en ce que l'eau d'égouttage qui se forme et/ou qui est libérée lors du compostage de la phase solide est envoyée à l'eau usée ou à sa phase liquide.

13. Procédé selon l'une des revendications précédentes, caractérisé en ce que la vapeur d'eau qui quitte le filtre à biomasse (6) est condensée et en ce que la chaleur de condensation ainsi dégagée est utilisée pour un chauffage du courant d'air avant son entrée dans le ou les filtres à biomasse (6).
